# EUROPÄISCHE PATENTANMELDUNG

(11) **EP 2 505 313 A1**
(43) Veröffentlichungstag der Anmeldung: **03.10.2012**
(21) Anmeldenummer: 12161416.8
(22) Anmeldetag: 27.03.2012
(51) Int. Cl.: B25B 27/00, B25B 27/16

(54) **Vorrichtung zum Montieren einer Ringflanschdichtung**

(30) Priorität: 30.03.2011 AT 4442011
(71) Anmelder: Seiringer, Josef, 4841 Ungenach (AT)
(72) Erfinder: Seiringer, Josef, 4841 Ungenach (AT)
(74) Vertreter: Hübscher, Helmut

(57) **Zusammenfassung**

Um eine Vorrichtung zum Montieren einer Ringflanschdichtung zu schaffen, die einen in eine Ringnut (3) der miteinander verschraubbaren Ringflansche (1) einsetzbaren, ferromagnetischen Dichtungsring (2) umfasst, wird ein zwischen die Ringflansche (1) einführbarer Griffsteg (5) vorgeschlagen, der an seinem einen Ende einen magnetischen Schuh (6) mit einer an den Außendurchmesser des Dichtungsrings (2) angepassten, sich nur über einen Teil der Höhe des Dichtungsrings (2) erstreckenden Aufnahme (7) für den Dichtungsring (2) aufweist.

## Beschreibung

Die Erfindung bezieht sich auf eine Vorrichtung zum Montieren einer Ringflanschdichtung, die einen in eine Ringnut der miteinander verschraubbaren Ringflansche einsetzbaren, ferromagnetischen Dichtungsring umfasst.

Zum Abdichten von im Zuge von Rohrleitungen eingesetzten Ringflanschverbindungen werden metallische Dichtungsringe eingesetzt, die in Ringnuten der miteinander verschraubbaren Ringflansche eingreifen und beim Anziehen der Flanschschrauben unter einer elastischen und plastischen Verformung dichtend in die Ringnuten eingepresst werden. Die Dichtungsringe werden zu diesem Zweck häufig aus einem Weicheneisenwerkstoff gefertigt. Nachteilig ist bei der Montage bzw. beim Auswechseln der Ringflanschdichtungen, dass der Dichtungsring in den Montagespalt zwischen den zu verbindenden Ringflanschen eingeführt und in einer zu den Ringnuten konzentrischen Lage gehalten werden muss, um beim Anziehen der Flanschschrauben den Eingriff des Dichtungsrings in die einander axial gegenüberliegenden Ringnuten der Ringflansche sicherzustellen. Diese montagegerechte Halterung im Spalt zwischen den Ringflanschen ist insbesondere dann schwierig, wenn die Achse der Rohrleitung horizontal verläuft und mit größeren Nenndurchmessern der Rohrleitungen zu rechnen ist. In diesem Zusammenhang ist zu bedenken, dass die Spaltweite des Montagespalts zwischen den zu verbindenden Ringflanschen im Allgemeinen nur geringfügig größer als die Höhe des Dichtungsrings ist. Der Erfindung liegt somit die Aufgabe zugrunde, eine Vorrichtung anzugeben, mit deren Hilfe der Dichtungsring in einfacher Weise in einer vorgegebenen Montagelage zwischen den Ringflanschen gehalten werden kann, um durch ein entsprechendes Anziehen der Flanschschrauben den Dichtungsring ordnungsgemäß in die ihn aufnehmenden Ringnuten einpressen zu können.

Ausgehend von einer Ringflanschdichtung der eingangs geschilderten Art löst die Erfindung die gestellte Aufgabe durch einen zwischen die Ringflansche einführbaren Griffsteg, der an seinem einen Ende einen magnetischen Schuh mit einer an den Außendurchmesser des Dichtungsrings angepassten, sich nur über einen Teil der Höhe des Dichtungsrings erstreckenden Aufnahme für den Dichtungsring aufweist.

Die Erfindung macht sich den Umstand zu Nutze, dass übliche Dichtungsringe für die angesprochenen Ringflanschdichtungen aus einem ferromagnetischen Werkstoff bestehen, sodass eine Halterung der Dichtungsringe über Magnetkräfte möglich wird. Die Halterung des Dichtungsrings am Ende eines in den Montagespalt zwischen zwei Ringflanschen einführbaren Griffstegs wird konstruktiv dadurch erreicht, dass der für die Ringhalterung vorgesehene, magnetische Schuh eine an den Außendurchmesser des Dichtungsrings angepasste Aufnahme aufweist, die sich in Umfangsrichtung formschlüssig an den Dichtungsring anlegt und dadurch gewährleistet, dass die Ringebene mit der Griffstegebene zumindest im Wesentlichen zusammenfällt. Da sich die durch den magnetischen Schuh gebildete Aufnahme für den Dichtungsring nur über einen Teil der Höhe des Dichtungsrings erstreckt, kann der Dichtungsring mit Hilfe des Griffstegs während der Montage bis zum Eingriff des Dichtungsrings in die Ringnuten der Ringflansche in der Montagelage gehalten werden. Danach ist ja eine gesonderte Halterung des Dichtungsrings nicht mehr nötig.

Besonders vorteilhafte Halterungsbedingungen ergeben sich, wenn die Aufnahme des Schuhs für den Dichtungsring eine in Umfangsrichtung verlaufende Reihe von radial ausgerichteten Permanentmagneten aufweist, was einen für die Ringhalterung günstigen Verlauf der Magnetlinien mit sich bringt. Die Permanentmagneten sollen dabei mit ihren freien Polen zumindest angenähert eine Zylinderfläche zur Anlage am Außenumfang des Dichtungsrings bestimmen. Sind die Polflächen der Permanentmagneten mit einer entsprechenden Zylinderfläche versehen, so ergeben sich besonders vorteilhafte Anlagebedingungen. In den meisten Fällen ist es jedoch hinreichend, Permanentmagneten mit ebenen Polflächen einzusetzen, die gegenüber der Zylinderfläche des Dichtungsrings tangential verlaufen.

Damit der Griffsteg den Magnetfluss der Permanentmagnete nicht beeinträchtigen kann, empfiehlt es sich, den der Griffsteg aus einem nichtferromagnetischen Werkstoff zu fertigen.

In der Zeichnung ist der Erfindungsgegenstand beispielsweise dargestellt. Es zeigen
Fig. 1 eine Ringflanschdichtung in einem schematischen Axialschnitt und
Fig. 2 eine erfindungsgemäße Vorrichtung zum Montieren einer solchen Ringflanschdichtung in einer vereinfachten Seitenansicht.

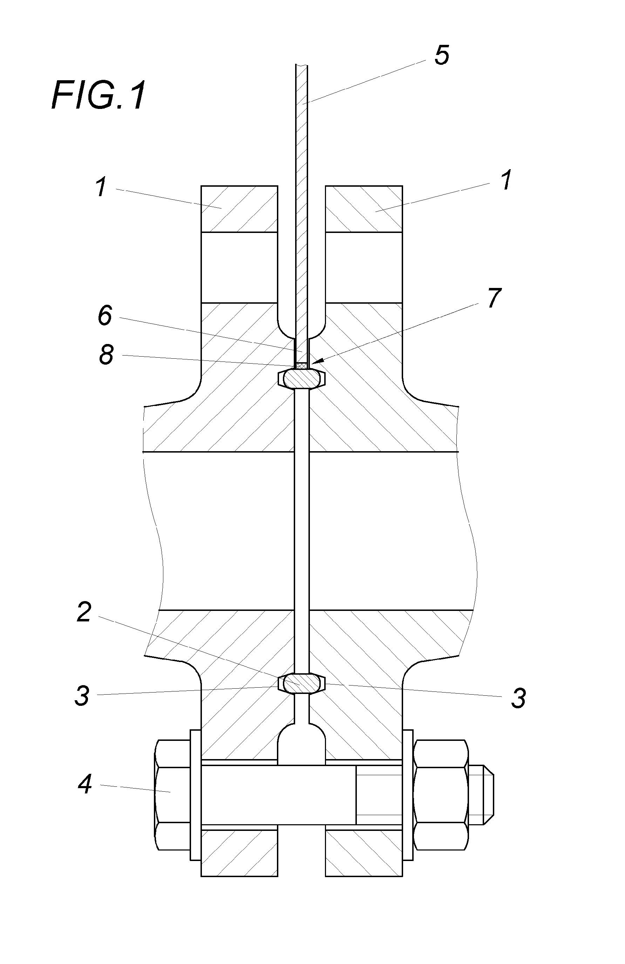

In der Fig. 1 ist eine übliche Ringflanschdichtung dargestellt. Die im Zuge einer Rohrleitung vorgesehene Flanschverbindung weist zwei miteinander zu verschraubende Ringflansche 1 auf, die zwischen sich einen Dichtungsring 2 aufnehmen, der in je eine Ringnut 3 der Ringflansche 1 eingreift. Mit Hilfe von über den Umfang der Ringflansche 1 verteilten Flanschschrauben 4 kann der üblicherweise aus einem Weicheisenwerkstoff gefertigte Dichtungsring 2 unter einer elastischen und plastischen Verformung dichtend in die Ringnuten 3 eingepresst werden.

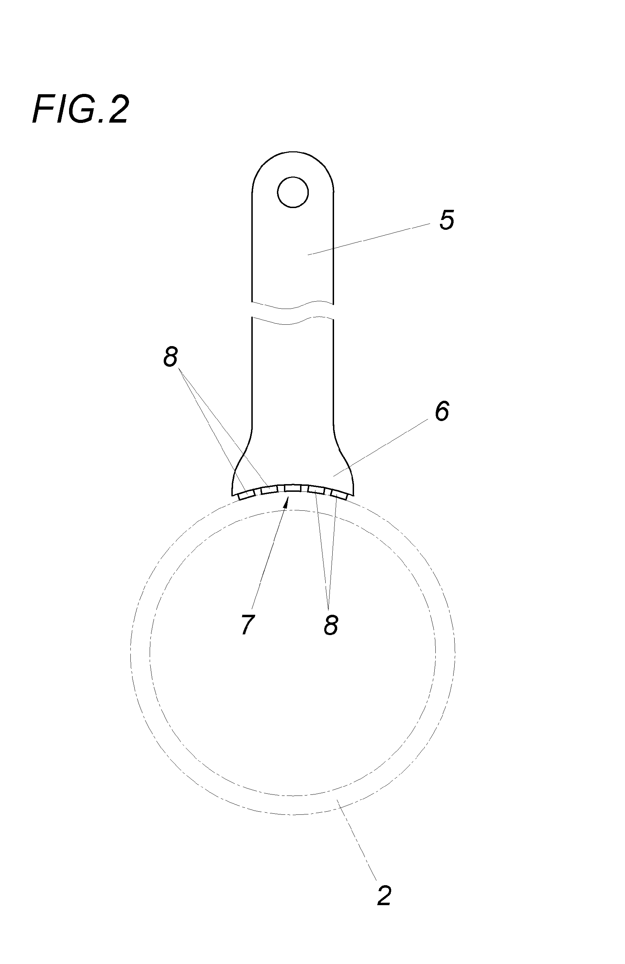

Um den Dichtungsring 2 montieren zu können, werden die Ringflansche 1 in einem gegenseitigen axialen Abstand positioniert, der im Allgemeinen nur geringfügig größer als die Höhe des Dichtungsrings 2 ist. Dies bedeutet, dass der Dichtungsring 2 in den vergleichsweise engen Montagespalt zwischen den Ringflanschen 1 eingeführt und in diesem Montagespalt konzentrisch zu den Ringnuten 3 zu halten ist, bis der Dichtungsring 2 ausreichend tief für eine Selbsthalterung in die Ringnuten 3 eingreift. Zu diesem Zweck ist erfindungsgemäß ein Griffsteg 5 vorgesehen, der an seinem einen Ende einen magnetischen Schuh 6 mit einer Aufnahme 7 für den ferromagnetischen Dichtungsring 2 aufweist, wie dies der Fig. 2 entnommen werden kann. Diese Aufnahme 7 ist an den Außendurchmesser des Dichtungsrings 2 angepasst und wird vorteilhaft durch eine in Umfangsrichtung verlaufende Reihe von radial ausgerichteten Permanentmagneten 8 gebildet. Aus der Fig. 1 ist ersichtlich, dass der Griffsteg 5 mit dem Schuh 6 eine Dicke aufweist, die sich nur über einen Teil der Höhe des Dichtungsrings 2 erstreckt, sodass der Dichtungsring 2 über den Griffsteg 5 auch beim Anziehen der Flanschschrauben 4 montagerecht gehalten werden kann.

Da die Permanentmagneten 8 am Außenumfang des Dichtungsrings 2 anliegen, kann der Dichtungsring 2 vorteilhaft in einer Ebene mit dem Griffsteg 5 gehalten und in den Montagespalt zwischen den Ringflanschen 1 eingebracht werden, um mit dem Anziehen der eingesetzten Flanschschrauben 4 die Ringflanschdichtung herzustellen. Der Griffsteg 5 kann dann vom Dichtungsring 2 abgezogen und aus dem verbleibenden Spalt zwischen den Ringflanschen 1 herausgezogen werden. Um insbesondere Dichtungsringe 2 mit einem größeren Durchmesser in einer Montagelage ausreichend genau halten zu können, können auch zwei oder mehrere Griffstege 5 über den Umfang des Dichtungsrings 2 verteilt eingesetzt werden.

## Patentansprüche

1. Vorrichtung zum Montieren einer Ringflanschdichtung, die einen in eine Ringnut (3) der miteinander verschraubbaren Ringflansche (1) einsetzbaren, ferromagnetischen Dichtungsring (2) umfasst, **gekennzeichnet durch** einen zwischen die Ringflansche (1) einführbaren Griffsteg (5), der an seinem einen Ende einen magnetischen Schuh (6) mit einer an den Außendurchmesser des Dichtungsrings (2) angepassten, sich nur über einen Teil der Höhe des Dichtungsrings (2) erstreckenden Aufnahme (7) für den Dichtungsring (2) aufweist.

2. Vorrichtung nach Anspruch 1, **dadurch gekennzeichnet, dass** die Aufnahme (7) für den Dichtungsring (2) eine in Umfangsrichtung verlaufende Reihe von radial ausgerichteten Permanentmagneten (8) aufweist.

3. Vorrichtung nach Anspruch 2, **dadurch gekennzeichnet, dass** die Permanentmagneten (8) mit ihren freien Polen zumindest angenähert eine Zylinderfläche zur Anlage am Außenumfang des Dichtungsrings (2) bestimmen.

4. Vorrichtung nach einem der Ansprüche 1 bis 3, **dadurch gekennzeichnet, dass** der Griffsteg (5) aus einem nichtferromagnetischen Werkstoff gefertigt ist.
